# FASCICULE DE BREVET EUROPEEN

(11) **EP 0 410 836 B1**
(45) Date de publication et mention de la délivrance du brevet: **06.10.1993**
(21) Numéro de dépôt: 90401989.0
(22) Date de dépôt: 10.07.1990
(51) Int. Cl.: B23C 3/12, B23Q 11/04

(54) **Dispositif de contournement de bavures bloquantes pour un outil d'ébavurage**
Vorrichtung für Entgratungsmaschinen zum Entgraten von Werkstückkanten
Device for an edge-trimming machine removing a burr along the edge of a workpiece

(30) Priorité: 12.07.1989 FR 8909430
(43) Date de publication de la demande: 30.01.1991
(73) Titulaire: COMMISSARIAT A L'ENERGIE ATOMIQUE, 75015 Paris Cédex 15 (FR); AUTOMOBILES PEUGEOT, 75116 Paris (FR); AUTOMOBILES CITROEN, 92200 Neuilly-sur-Seine (FR)
(72) Inventeur: Sgarbi, Frédéric, F-75015 Paris (FR); Ferard, Michel, F-78500 Sartrouville (FR)
(74) Mandataire: Mongrédien, André

(56) Documents cités:
- FR-A- 2 253 601
- GB-A- 1 005 576
- JP-A-59 214 508
- JP-A-59 214 509
- JP-A-61 014 811
- JP-A-63 007 209
- JP-A-63 180 408
- SU-A- 764 873

## Description

L'invention se rapporte à un dispositif de contournement de bavures bloquantes pour un outil d'ébavurage rotatif dépendant d'un support.

Les bavures produites par exemple sur les pièces de fonderie à l'emplacement du plan de joint ont une taille imprévisible et qui peut varier fortement le long du contour à ébavurer. Il n'existe pas dans le cas d'usinages robotisés de moyen pour prévoir l'arrivée de l'outil sur des parties de grande taille dites "bavures bloquantes" qui sont susceptibles d'arrêter l'outil et de l'endommager. On connaît simplement des systèmes où une condition inacceptable d'usinage est détectée, notamment par l'élévation du niveau des vibrations, afin de retirer alors l'outil et d'arrêter l'usinage.

Le système habituellement présent sur les poignets de robots porteurs d'un outil d'ébavurage, qui consiste en un élément élastique qui permet à l'outil de se rapprocher ou de s'éloigner du contour en fonction des efforts de coupe, ne suffit pas car il est impossible de garantir que l'outil sera dégagé suffisamment.

Le dispositif objet de l'invention assure le contournement des bavures quelles que soient leurs dimensions et indépendamment des caractéristiques du robot et de l'outil de coupe.

Il consiste à appliquer à l'outil un effort de coupe normalement constant sur le contour et à effectuer un dégagement momentané de l'outil dès que la quantité de matière à enlever devient excessive, ce qui peut être repéré à l'aide des paramètres de coupe et notamment de la vitesse de rotation de l'outil. Dans le cas d'un moteur pneumatique, on mesurera directement cette vitesse par un tachymètre et la rétraction de l'outil sera commandée dès qu'une vitesse de seuil sera atteinte. Dans le cas d'un moteur électrique, on obtiendra éventuellement une information équivalente en mesurant le courant consommé, qui peut être facilement relié à la vitesse de rotation de l'outil.

Plus précisément, l'invention consiste en un dispositif de contournement de bavures bloquantes pour un outil d'ébavurage rotatif dépendant d'un support, caractérisé en ce qu'il comprend un moyen de pressage de l'outil sur le contour à ébavurer et de rétraction de l'outil au-dessus du contour disposé entre l'outil et le support, constitué d'un vérin pneunatique ayant une chambre dont les accroissements de volume correspondent à des déplacements de l'outil vers le contour à ébavurer, reliée par un circuit d'asservissement soit à une source de gaz à pression constante soit à un orifice de dégonflage, et un capteur apte à mesurer une grandeur représentative de la vitesse de rotation de l'outil et à coopérer avec le circuit d'asservissement pour commander le vérin pneumatique en fonction des valeurs prises par ladite grandeur.

Le moyen de pressage et de rétraction est un vérin pneumatique ayant une chambre, dont les accroissements de volume correspondent à des déplacements de l'outil vers le contour à ébavurer, reliée par le circuit d'asservissement soit à une source de gaz à pression constante soit à un orifice de dégonflage.

On va maintenant décrire l'invention à l'aide des figures suivantes annexées à titre illustratif et non limitatif :
- la figure 1 représente une réalisation de l'invention ;
- la figure 2 représente un élément optionnel de l'invention ; et
- la figure 3 représente plus précisément les asservissements utilisés.

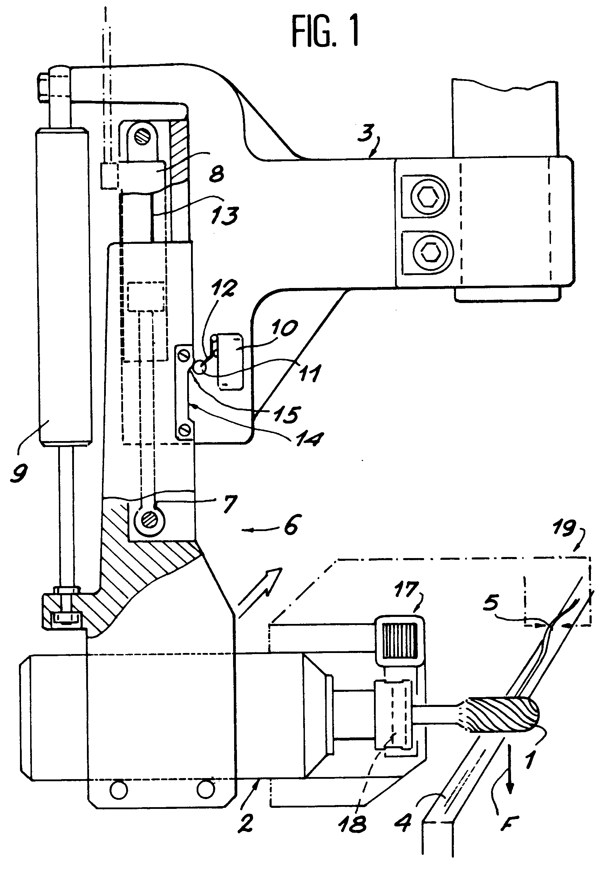

La figure 1 représente une fraise 1 à l'extrémité d'une broche 2 actionnée par un moteur pneumatique et reliée à un poignet de robot 3. Ce dernier est déplacé à une vitesse d'avance uniforme de sorte que la fraise 1 usine un contour 4 en retirant une bavure située sur ce contour. On a référencé par 5 une portion bloquante de la bavure. L'axe de rotation de la fraise 1 est à peu près perpendiculaire au contour 4, et les efforts de coupe comprennent une composante de pressage d'outil F perpendiculaire à l'axe de rotation de la fraise 1, normale au contour 4 et orientée, dans le cas d'un fraisage en avalant, en direction opposée au poignet 3.

Cet effort de pressage est obtenu grâce à un vérin pneumatique 6 dont la tige 7, fixée à la broche 2, est parallèle à la composante de pressage F et dont le cylindre 8 est fixé à une extrémité au poignet 3. Une glissière verticale 13, parallèle à l'effort de pressage F, guide la broche en permettant sa translation par rapport au poignet 3. Un amortisseur 9 est également disposé entre la broche 2 et le poignet 3 en parallèle avec le vérin pneumatique 8. Enfin, un contact électrique 10 est fixé au poignet 3 à proximité du cylindre 8 et comprend, à l'extrémité d'une lame élastique 12, un élément sensible 11 qui est placé devant ou dans une rainure longitudinale 14 limitée par une extrémité 15 et établie sur la partie de glissière 13 solidaire de la broche 2.

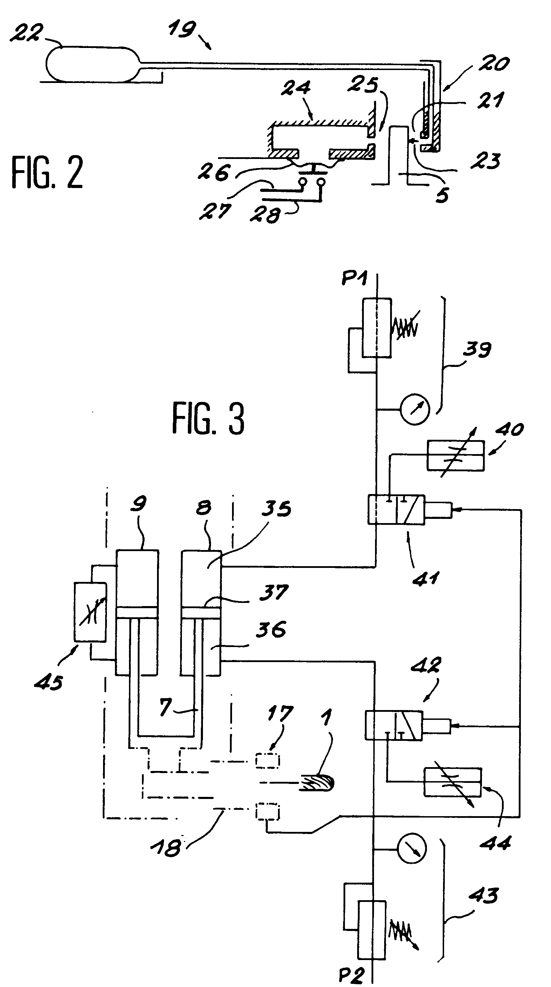

Un tachymètre 17 est disposé sur la broche 2, en face d'un disque 18 tournant avec la fraise 1. On peut facultativement prévoir un capteur pneumatique 19 qui précède la fraise 1 le long du contour 4 sans toucher celui-ci et qui se compose, comme on le voit figure 2, de deux parties séparées dont l'une est constituée d'un tube 20 terminé par une partie recourbée 21 et d'une source d'air comprimé 22 qui entretient un courant d'air 23 dans le tube 20, puis hors de celui-ci en direction de l'autre partie du capteur pneumatique 19 ; cette autre partie est constituée d'un boîtier 24 muni d'un orifice 25 devant le courant d'air 23 et qui comprend à l'intérieur une membrane déformable 26 séparant de l'orifice 25 une paire de contacts électriques séparés 27 et 28.

En fonctionnement normal, le courant d'air 23 pénètre donc dans le boîtier 24 et déforme la membrane 26 qui touche la paire de contacts 27 et 28 et ferme ainsi, puisqu'elle est en matériau conducteur, un circuit électrique de détection non représenté en détail. Cependant, dès qu'une bavure bloquante 5 apparaît, elle s'interpose le long du courant d'air 23 : la surpression dans le boîtier 24 cesse, la membrane 26 se redresse et le circuit électrique s'ouvre. Le grand avantage du capteur pneumatique 19 est d'être très fiable et notamment insensible aux poussières et saletés diverses, que le courant d'air balaie immédiatement mais qui pourraient recouvrir les parties d'émission et de réception d'un capteur comportant un rayon lumineux.

On se reporte maintenant également à la figure 3. Le cylindre 8 renferme deux chambres 35 et 36 séparées par un piston 37 lié à la tige 7. La première chambre 35, dont l'accroissement de volume correspond à un déplacement de la fraise 1 vers le contour 4, est reliée soit à une source de pression P1 par l'intermédiaire d'un dispositif à détendeur manuel et manomètre 39, soit à un orifice de dégonflage calibré 40. Une électrovanne 41 assure la commutation. De même, la seconde chambre 36 est reliée par une électrovanne 42 soit à une seconde source de pression P2 par l'intermédiaire d'un dispositif de réglage à détendeur manuel et manomètre 43, soit à un orifice de dégonflage 44.

La commande des électrovannes 41 et 42 est assurée par le tachymètre 17 par l'intermédiaire de moyens informatiques constitués soit d'un logiciel de pilotage du poignet de robot 3 soit d'une carte électronique autonome. L'accroissement de la taille de la bavure usinée se traduit par un ralentissement de la rotation de la fraise 1. Lorsque le tachymètre constate que la vitesse de rotation devient inférieure à une valeur de seuil, on considère qu'on se trouve en face d'une bavure bloquante 5 et les électrovannes 41 et 42 sont commutées simultanément de sorte que la pression P2 entre dans la seconde chambre 36 alors que la première chambre 35 est reliée à l'orifice de dégonflage 40 : la tige 7 est tirée dans le cylindre 8, et la fraise 1 rétractée et éloignée du contour 4. Dès que la vitesse de rotation redevient supérieure à la vitesse de seuil, une commutation inverse des électrovannes 41 et 42 relie la première chambre 35 à la source de pression P1, tout en reliant la seconde chambre 36 à l'orifice de dégonflage 44, et permet d'exercer à nouveau un effort de pressage F. Le capteur pneumatique 19 est utile pour compléter les mesures du tachymètre 17 dans le cas de bavures de très grande taille : il est alors à craindre que la rétraction de la fraise 1 ne soit pas suffisamment rapide à cause des temps de réaction de l'asservissement. Le capteur pneumatique 19 permet d'anticiper ces bavures et d'amorçer à l'avance le dégagement de la fraise 1.

Quand la fraise 1 parcourt le début d'une bavure bloquante 5, elle est donc progressivement rétractée par une suite de commutations. Comme le mouvement oscillatoire ainsi produit peut être très rapide, on utilise l'amortisseur 9 pour l'atténuer et rendre les commutations moins fréquentes. L'amortisseur 9, constitué en fait d'un vérin dont le cylindre est relié au robot 3, la tige à la broche 2, et dont les chambres sont reliées entre elles par une dérivation à passage resserré 45, permet ainsi de limiter les broutements. L'utilisation d'un amortisseur réglable permet de fixer la vitesse de dégagement de la fraise, donnée par la formule V = F/B (F = effort de pressage, B = coefficient d'amortissement).

L'absence de bavure est repérée quand la fraise 1 tourne à une seconde vitesse de seuil correspondant à un usinage à vide. Cette seconde vitesse de seuil, évidemment supérieure à celle à laquelle les électrovannes 41 et 42 sont commutées, indique les endroits du contour 4 où l'ébavurage a été terminé. D'autres passes d'ébavurage sont par contre effectuées pour le reste du contour 4.

Le contact 10 permet d'éviter des erreurs d'interprétation. En effet, à la fin d'une bavure, l'amortisseur 9 ne permet qu'un retour progressif de la fraise 1 vers le contour 4, et celle-ci peut être momentanément décollée de la fin de la bavure le long du contour 4 si le poignet 3 est avancé trop rapidement le long du contour 4. La fraise 1 tourne alors à vide et le système de pilotage pourrait en déduire à tort qu'il n'y a pas de bavure à cet endroit. C'est pourquoi le poignet 3 est déplacé à une distance constante du contour 4 -abstraction faite des bavures- pour que, dès qu'une bavure est rencontrée et que la fraise 1 doit être rétractée, même d'une petite quantité, l'élément sensible 11 dépasse l'extrémité 15 et plonge dans la rainure 14, ce qui indique plus sûrement au système de pilotage que l'ébavurage n'est pas terminé à cet endroit. Le capteur pneumatique 19 peut être utilisé pour prévoir l'arrivée sur les bavures bloquantes 5 et ralentir l'avance du poignet 3.

Enfin, la vitesse de rotation correspondant au seuil de rétraction est fixée par l'utilisateur mais est avantageusement choisie selon l'usure de la fraise 1 et peut être approchée par une relation linéaire entre celle correspondant à une fraise neuve et celle correspondant à une fraise à réaffûter.

## Revendications

1. Dispositif de contournement de bavures bloquantes (5) pour un outil d'ébavurage rotatif (1) dépendant d'un support (3), caractérisé en ce qu'il comprend un moyen (6) de pressage de l'outil sur le contour (4) à ébavurer et de rétraction de l'outil au-dessus du contour à ébavurer disposé entre l'outil et le support, constitué d'un vérin pneumatique ayant une chambre (35) dont les accroissements de volume correspondent à des déplacements de l'outil vers le contour à ébavurer, reliée par un circuit d'asservissement soit à une source de gaz à pression constante (P1) soit à un orifice de dégonflage (40), et un capteur (17) apte à mesurer une grandeur représentative de la vitesse de rotation de l'outil et à coopérer avec le circuit d'asservissement pour commander le vérin pneumatique en fonction des valeurs prises par ladite grandeur.

2. Dispositif de contournement de bavures bloquantes selon la revendication 1, caractérisé en ce qu'il comprend un amortisseur (9) disposé entre l'outil (1) et le support (3).

3. Dispositif de contournement de bavures bloquantes selon la revendication 1, caractérisé en ce qu'il comprend un moyen de repérage (10) des rétractions de l'outil.

4. Dispositif de contournement de bavures bloquantes selon la revendication 1, caractérisé en ce qu'il comprend un capteur de bavures (19) lié à l'outil et constitué d'une buse (21) émettant un courant d'air disposée d'un côté de la bavure et, de l'autre côté de la bavure, une surface souple (26) interceptant le courant d'air ainsi qu'un circuit électrique (27, 28) adjacent à la surface souple et qui, en fonction des déformations de la surface souple, est ouvert ou fermé.

## Claims

1. Device for contouring blocking burrs (5) for a rotary deburring tool (1) dependent on a support (3), characterized in that it comprises a means (6) for pressing the tool onto the contour (4) to be deburred and for retracting the tool above the contour to be deburred positions between the tool and the support, constituted by a pneumatic jack having a chanber (35), whose volume increases correspond to displacements of the tool towards the contour to be deburred, connected by a control circuit either to a constant pressurized gas source (P1) or to a deflation orifice (40), and a sensor (17) able to measure a quantity representative of the rotation speed of the tool and cooperate with the control circuit for controlling the pneumatic jack as a function of the values assumed by said quantity.

2. Device for contouring blocking burrs according to claim 1, characterized in that it comprises a shock absorber (9) positioned between the tool (1) and the support (3).

3. Device for contouring blocking burrs according to claim 1, characterized in that it has an indicating means (10) for tool retractions.

4. Device for contouring blocking burrs according to claim 1, characterized in that it comprises a pneumatic sensor (19) linked with the tool and constituted by a nozzle (21) discharging an air flow located on one side of the burr and, on the other side of the latter, a flexible surface (26) intercepting the air flow, as well as an electric circuit (27, 28) adjacent to the flexible surface and which is opened or closed as a function of deformations of the flexible surface.

## Patentansprüche

1. Vorrichtung zum Umfahren von blockierenden Graten (5) für ein rotierendes Entgratungswerkzeug (1), verbunden mit einem Support (3).
dadurch **gekennzeichnet,**
daß es eine Zu- und Rückstelleinrichtung (6) enthält, die das Werkzeug auf die zu entgratende Kontur (4) drückt bzw. von der zu entgratenden Kontur zurückzieht, angeordnet zwischen dem Werkzeug und dem Support, bestehend aus einem pneumatischen Zylinder mit einer Kammer (35), deren Volumensvergrößerungen den Werkzeugbewegungen in Richtung der zu entgratenden Kontur entsprechen, über einen Regelkreis entweder mit einer druckkonstanten Gasquelle (P1) oder einer Entleerungsöffnung (40) verbunden, und einen Meßfühler (17), der geeignet ist, eine für die Rotationsgeschwindigkeit des Werkzeugs repräsentative Größe zu messen und mit dem Regelkreis zusammenzuwirken, um den pneumatischen Zylinder zu steuern, in Abhängigkeit von den Werten, welche die genannte Größe annimmt.

2. Vorrichtung zum Umfahren von blockierenden Graten nach Anspruch 1, dadurch gekennzeichnet, daß sie einen Stoßdämpfer (9) enthält, der zwischen dem Werkzeug und dem Support (3) angeordnet ist.

3. Vorrichtung zum Umfahren von blockierenden Graten nach Anspruch 1, dadurch gekennzeichnet, daß sie ein Rückstell-Positionsbestimmungsmittel (10) enthält.

4. Vorrichtung zum Umfahren von blockierenden Graten nach Anspruch 1, dadurch gekennzeichnet, daß sie einen Grate-Meßfühler (19) umfaßt, der mit dem Werkzeug verbunden ist und eine einen Luftstrom aussendende Düse (21) enthält, angeordnet auf einer Seite des Grats und, auf der anderen Seite des Grats, eine den Luftstrom auffangende elastische Fläche (26) sowie einen elektrischen Kreis (27, 28) nahe der elastischen Fläche, der geöffnet oder geschlossen wird in Abhängigkeit von Formänderungen der elastischen Fläche.
